Europäisches Patentamt

European Patent Office

Office européen des brevets

(19)

(11) Veröffentlichungsnummer : **0 461 131 B1**

(12) # EUROPÄISCHE PATENTSCHRIFT

(45) Veröffentlichungstag der Patentschrift :
**30.12.92 Patentblatt 92/53**

(51) Int. Cl.⁵ : **F16C 39/04,** F04D 29/04,
F01D 3/04

(21) Anmeldenummer : **90903367.2**

(22) Anmeldetag : **28.02.90**

(86) Internationale Anmeldenummer :
**PCT/EP90/00332**

(87) Internationale Veröffentlichungsnummer :
**WO 90/10161 07.09.90 Gazette 90/21**

(54) **AXIALSCHUBENTLASTUNGSEINRICHTUNG.**

(30) Priorität : **04.03.89 DE 3906961**
**07.09.89 DE 3929750**

(43) Veröffentlichungstag der Anmeldung :
**18.12.91 Patentblatt 91/51**

(45) Bekanntmachung des Hinweises auf die
Patenterteilung :
**30.12.92 Patentblatt 92/53**

(84) Benannte Vertragsstaaten :
**AT BE CH DE ES FR GB IT LI NL SE**

(56) Entgegenhaltungen :
**EP-A- 0 121 053**
**DE-C- 895 102**
**FR-A- 402 952**
**FR-A- 1 134 136**
**US-A- 3 393 947**

(73) Patentinhaber : **KSB Aktiengesellschaft**
**Johann-Klein-Strasse 9**
**W-6710 Frankenthal (DE)**

(72) Erfinder : **GAFFAL, Karl**
**Am Wurmberg 13**
**W-6713 Freinsheim (DE)**

Anmerkung : Innerhalb von neun Monaten nach der Bekanntmachung des Hinweises auf die Erteilung des europäischen Patents kann jedermann beim Europäischen Patentamt gegen das erteilte europä-ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent-übereinkommen).

## Beschreibung

Die Erfindung betrifft eine Entlastungseinrichtung gemäß dem Oberbegriff des Hauptanspruches.

Strömungsmaschinen ein- oder mehrstufiger Bauart weisen häufig eine Axialschubentlastungseinrichtung auf, um die innerhalb der Maschine vorherrschenden Schubkräfte des Rotors ausgleichen zu können. Unterschiedliche Bauarten von Axialschubentlastungseinrichtungen sind beispielsweise in dem RSB-Kreiselpumpenlexikon dargestellt und ausführlich beschrieben. Bekannte Entlastungseinrichtungen, zum Beispiel gemäß der DE-A-1 453 787 oder der DE-A-1 528 720, sehen scheibenförmige oder-kolbenförmige Entlastungselemente zum Schubausgleich vor. Diesen Teilen sind Stopfbuchsen bzw. Lager nachgeordnet, innerhalb derer die rotierenden Teile der Strömungsmaschine aufgenommen werden Entsprechend dem Anwendung findenden Schmiermittel können die Lager innerhalb oder außerhalb des Strömungsmaschinengehäuses angeordnet sein. Den bekannten Entlastungseinrichtungen ist das Merkmal gemeinsam, daß sie neben einem erheblichen Platzbedarf und einem großen Bauteileaufwand auch hohe Strömungsverluste aufweisen, da sie mit bereits gefördertem Medium beaufschlagt werden.

Aus der gattungsgemäße EP-A-0 121 053 ist eine Axiallagerung mit Rippsegmenten bekannt, die nur mit dem gesamten Antriebsmotor demontiert werden kann Um preiswerte kleinere Axiallager verwenden zu können, ist die rotierende Axiallagerscheibe an ihrem inneren und äußeren Umfang mit Drosselspalten zur Verringerung der auftretenden Axialschubkräfte versehen. Eine Aufhebung des Axialschubes ist dadurch nicht möglich.

Der Erfindung liegt die Aufgabe zugrunde, zum Ausgleich des Axialschubes eine vielseitig verwendbare Entlastungseinrichtung zu entwickeln, die bei erheblich verringertem Bauaufwand kleinere Strömungsverluste aufweist. Die Lösung dieser Aufgabe erfolgt gemäß dem kennzeichnenden Teil des Hauptanspruches.

Die Ausbildung der Entlastungseinrichtung als selbständige bauliche Einheit, wobei alle funktionsnotwendigen Teile innerhalb eines einfach zu montierenden Gehäuses angeordnet sind, stellt ein Minimum an Arbeitsaufwand dar. Denn es ist lediglich erforderlich, das mit der Welle rotierende Entlastungselement auf der Welle in bekannter Weise zu fixieren und ein das Entlastungselement umgebende, alle wesentlichen Teile aufweisende Gehäuse in einer entsprechenden Aufnahme des Strömungsmaschinengehäuses anzuordnen. Aufwendige Einstellarbeiten des rotierenden Systems in bezug auf die gehäusefesten Teile der Entlastungseinrichtung können somit entfallen, da hier bereits eine Vorfertigung beim Hersteller möglich ist. Ein weiterer Vorteil ergibt sich durch die Integration der für die Lagerung des rotierenden Strömungsmaschinenteiles notwendigen Radial- und/oder Axiallager in die Entlastungseinrichtung. Damit entfallen weitere aufwendige Justierarbeiten, beispielsweise bei der Montage der Welle. Somit kann in eine einzige bauliche Einheit die Funktion von Wellenlagerung, Axialschubausgleich und Axialschubaufnahme integriert werden. Die so bedingte gravierende Verringerung des Bauaufwandes bewirkt zudem eine erhebliche Verkürzung der Baulänge der rotierenden Teile, wodurch zusätzlich eine Verbesserung des Schwingungsverhaltens des Rotors erreicht wird.

Das Anwendung findende Entlastungselement basiert auf dem Prinzip der an sich bekannten Entlastungsscheibe, wobei es bei gleichzeitiger Verwendung als Radiallager die Form eines Entlastungskolbens aufweist.

In den Unteransprüchen sind verschiedene Ausgestaltungen der Erfindung beschrieben und deren Vorteile werden im folgenden aufgeführt: Mit der erfindungsgemäßen Ausbildung ergibt sich ein Bauteil, welches für horizontale und vertikale Strömungsmaschinen, wie Pumpen und Motorpumpenaggregate, sowohl den Axialschubausgleich als auch die Radial- und Axiallagerung übernimmt. Hierbei werden infolge des im Normalbetrieb ausgeglichenen Axialschubes die Axiallager nur vernachlässigbar gering belastet Das komplette Bauteil ist direkt in die Strömungsmaschine integrierbar, wodurch externe Lager mit Einrichtungen zur Schmiermittel- und Kühlmittelversorgung und deren Überwachung entbehrlich werden Auch sind die Lager bei niedrig viskosen und warmen Flüssigkeiten verwendbar und der Bauteilaufwand ist gegenüber den herkömmlichen Lösungen um ein Vielfaches geringer. Letzteres bietet die Möglichkeit zur Einrichtung einer standarisierten kompakten Baukastengruppe. Wesentlich für die Energiebilanz des gesamten Aggregates ist der durch die weiche Drosselung des Entlastungsmediums über enge Axiallagerspalte bedingte erheblich verringerte Leckstromverlust.

Die in den Ansprüchen 11 bis 14 beschriebenen Ausgestaltungen sind gekennzeichnet durch eine in das Entlastungselement integrierte Fördereinrichtung. Damit ist die Möglichkeit gegeben, beispielsweise die Entlastungseinrichtung auch in den Motor eines stopfbuchslosen Pumpen-Motor-Aggregates zu integrieren. Die für die Funktion der Entlastungseinheit notwendige Druckdifferenz wird durch die Förderkanäle erzeugt, welche beispielsweise aus einfachen, an sich bekannten Bohrungen bestehen können. Damit kann an einem Motorende die Entlastungseinrichtung als kompakte Lager-Achsschubausgleichseinheit eingebaut werden.

Die den Regelspalt bildenden Lagerteile können auch durch das Anbringen von sogenannten Panzerschichten auf das Gehäuse und/oder das Entlastungselement erzeugt werden. Hierbei werden im Bereich der vorzusehenden Lager Materialien höherer Beständigkeit aufgeschweißt, aufgespritzt oder in entsprechender Weise angebracht. Auch ist es möglich, für das Entlastungselement bzw das Gehäuse direkt Materialien Anwendung finden zu lassen, welche für Lagerzwecke geeignet und fluidbeständig sind Somit genügt es, die den Regelspalt bildenden Lagerteile beispielsweise spanabhebend aus den Teilen der Entlastungseinrichtung herauszuarbeiten.

Ausführungsbeispiele der Erfindung sind in den Zeichnungen dargestellt und werden im folgenden näher beschrieben. Es zeigen die

Fig. 1 bis 3 verschiedene Positionen des Entlastungselementes, die

Fig. 4 in vergrößerter Darstellung den Aufbau der Entlastungseinrichtung und die

Fig. 5 eine Entlastungseinrichtung mit integrierter Fördereinrichtung.

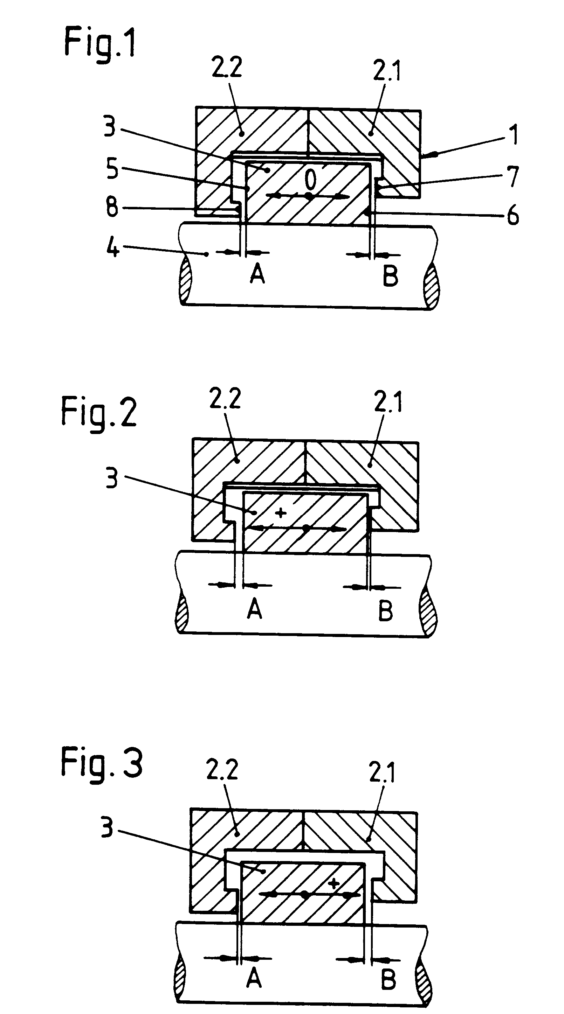

Die in Fig. 1 gezeigte bauliche Einheit (1) besteht aus einem zweiteiligen Gehäuse (2.1, 2.2), welches ein Entlastungselement (3) umhüllt, wobei letzteres in an sich bekannter Weise fest auf einer Welle (4) befestigt ist. Es handelt sich hierbei um eine Anbringung am antriebsfernen oder antriebsnahen Wellenende einer Strömungsmaschine. Die axialen Stirnseiten (5, 6) des Entlastungselsementes (3) bilden zusammen mit auf unterschiedlichen Durchmessern des Gehäuses (2.2, 2.1) angeordneten Gehäusewandteilen (7, 8) Regelspalte (A, B). Bei einem stabilen Betriebszustand mit ausgeglichenem Axialschub sind die Spalte (A) und (B) annähernd gleich groß. In der Zeichnung wird dies durch ein in das Entlastungselement eingezeichnetes Doppelpfeilsymbol mit einer mittig angeordneten Null gekennzeichnet. Die Druck erzeugende Seite der Strömungsmaschine befindet sich bei diesen Darstellungen jeweils rechts von der Entlastungseinrichtung.

In der Fig. 2 ist eine Position des Entlastungselementes (3) gezeigt, bei welcher der Regelspalt (A) größer als der der Strömungsmaschinenseite zugekehrte Regelspalt (B) ist. Als Folge davon entsteht ein Ausgleichs- oder Restaxialschub des Entlastungselementes zur linken Seite und damit zur Endseite der Strömungsmaschine, so daß die Regelspaltweiten (A, B) sich wieder angleichen.

Den umgekehrten Fall wiederum zeigt die Fig. 3, bei der der zunächst kleinere Regelspalt (A) durch den Ausgleichs- oder Restaxialschub des Entlastungselementes zur rechten Seite und damit zur Strömungsmaschinenseite vergrößert und der zunächst größere Regelspalt (B) wieder verkleinert wird.

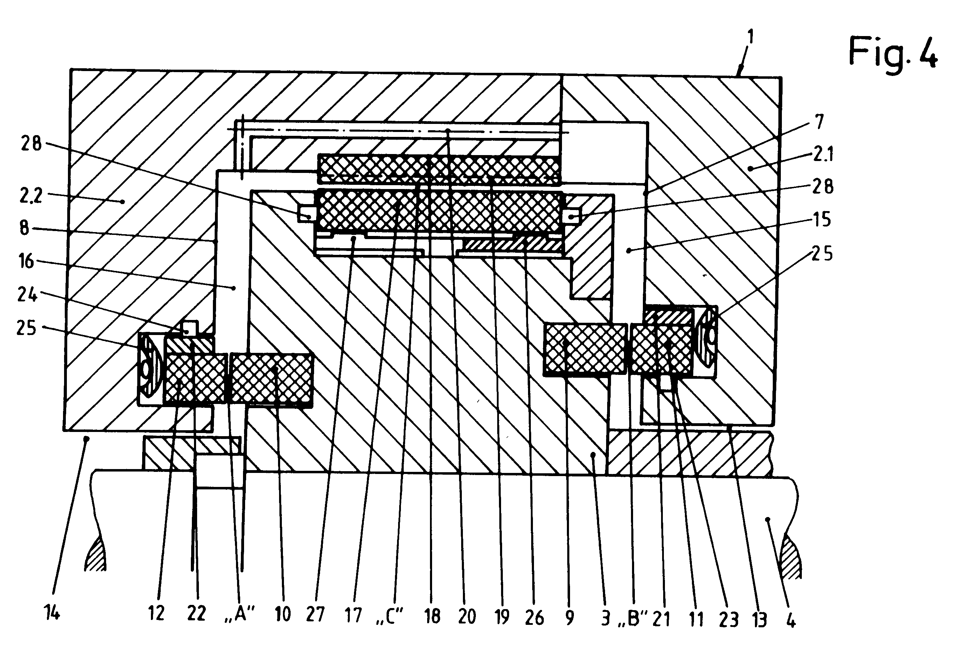

Die Fig. 4 zeigt eine detailliertere Darstellung einer als selbständige bauliche Einheit ausgebildeten Entlastungseinrichtung (1). Das Gehäuse ist asymmetrisch geteilt und verfügt über zwei Gehäusehälften (2.1, 2.2), die ein drehmomentübertragend auf einer Welle (4) befestigtes Entlastungselement (3) umschließen. Das Entlastungselement (3) weist rotierende Axiallagerringe (9, 10) auf, wobei diese mit jeweils gegenüberliegenden stationären Axiallagerringen (11, 12) zusammenwirken Dazwischen befinden sich Regelspalte (A) und (B), die bei nicht ausgeglichenen Axialschubverhältnissen jeweils gegen Null gehen und damit die Axiallagerfunktionen übernehmen. Im Normalfall bewirten die Regelspalte den Ausgleich des Axialschubes ohne Anlage der spaltbegrenzenden Bauteile Die Axiallagerspalte bilden hier gleichzeitig die Regelspalte für das Entlastungselement. Da der Flüssigkeitsdruck im Raum (13), welcher mit der Druckseite (14) der Strömungsmaschine in Verbindung steht, größer als der Druck in dem der Ausgleichseinrichtung nachgeordneten Raum (14) ist, wird der Regelspalt (B) von innen nach außen und der Regelspalt (A) von außen nach innen durchströmt. Bedingt durch die Drosselwirkung der Regelspalte (A, B) ergibt sich im Raum (15) ein kleinerer Druck als im Raum (13) und wiederum im Raum (16) ein höherer Druck als im Raum (14). Hierbei kann der Druck im Raum (15) gleich oder größer sein als der Druck im Raum (16). Bei einem vorhandenen Axialschub der Strömungsmaschine und einer bestehenden Druckdifferenz in den Räumen (13, 14) ergeben sich durch eine geeignete Durchmesserwahl der Axiallagerringe (9, 11 und 10, 12) in den Regelspalten (A, B, C) Kolbenkräfte, welche dem Axialschub der Strömungsmaschine das Gleichgewicht halten. Den Spalt (C) bildet in diesem Fall der Außendurchmesser einer rotierenden Radiallagerhülse (17) und der Innendurchmesser einer stationären Radiallagerbüchse (18), wobei letztere im Gehäuseteil (2.2) fest eingesetzt ist. Da der Radiallagerspalt (C) in seiner radialen Weite nicht veränderbar ist, kann über eventuelle Längsnuten (19) bzw. über Bypasskanäle (20) eine Anpassung an die Druckdifferenz in den Räumen (15, 16) vorgenommen werden.

Bei Störungen im Betrieb der Strömungsmaschine oder bei im Stillstand oder während des Fahrbetriebes auftretenden Axialschubdifferenzen, zum Beispiel Systemdruck und nur eine Wellendurchführung, müssen die nicht ausgeglichenen Axialschübe von einem Axiallager aufgenommen werden. Diese Axiallager sind in der Lage, Axialschübe in beiden Richtungen aufzunehmen. In erfindungsgemäßer Weise übernehmen dabei die Axiallagerringe (10, 12) die Axiallagerung bei Betriebszuständen mit nicht ausgeglichenen Axialschüben zur Endseite, hier die linke Seite, und die Axiallagerringe (9, 11) zur Strömungsmaschinenseite hin. Bei allen Betriebszuständen erfolgt die Radiallagerung durch die Radiallagerteile (17, 18).

Bei dem gezeigten Beispiel erfolgt die Schmierung der Lagerteile durch das Fördermedium, wodurch für die Lagerelemente ein Werkstoff notwendig ist, welcher gute Gleiteigenschaften und hohe Abriebfestigkeiten aufweist. In geeigneter Weise können hierfür Siliciumcarbid oder andere Keramiken bzw. Hartmetalle als Einsatzteile oder direkt aufgespritzte bzw. gepanzerte Schichten auf die Teile (3, 2.1 und 2.2) oder entsprechend geeignete Werkstoffe zur Herstellung der Teile (3, 2.1 und 2.2) Anwendung finden. Infolge der Drosselwirkung in den Regelspalten (A) und (B) sind derartige Werkstoffe auch beim Auftreten eines hydroabrasiven Verschleißes verwendbar. Die hohe Sprödigkeit derartiger Werkstoffe erfordert eine Befestigung der Bauteile, bei der nur Druckspannungen in die zu befestigenden Teile eingeleitet werden. In denjenigen Fällen, in denen dies nicht möglich ist, dürfen nur geringe Zug- oder Biegebelastungen zugelassen werden.

In dem gezeigten Ausführungsbeispiel sind die Axiallagerringe (9,10) in das Entlastungselement (3) eingeschrumpft, so daß sie unter Druckspannung stehen. Die damit zusammenwirkenden stationären Axiallagerringe (11, 12) könnten ebenfalls am Außendurchmesser in die Gehäuseteile (2.1, 2.2) eingeschrumpft werden; gezeigt ist aber eine sinnvollere Lösung, welche diesen Bauteilen eine Möglichkeit zur Anpassung an ihre entsprechend gegenüberliegenden und damit zusammenwirkenden Axiallagerringe ermöglicht. Erreicht wird dies durch einen in gewissen Grenzen frei beweglichen Einbau innerhalb der Gehäuseteile (2.1, 2.2). Zur Vermeidung von Zugspannungen durch die radialen Druckdifferenzen von innen nach außen sind Schrumpfringe (21, 22) am Außendurchmesser der Axiallagerringe (11, 12) aufgebracht worden, wobei Dichtringe (23, 24) in diesem Fall eine Bypassumströmung der Bauteile (11, 12) verhindern. Infolge der Anordnung der Dichtringe (23, 24) wird die vorhandene Druckdifferenz die Axiallagerringe (11, 12) jeweils in die Gehäuseteile (2.1) und (2.2) hineindrücken. Eine eventuelle Anpaßbewegung bzw. Anpreßbewegung der Bauteile (11, 12) an ihre zugehörigen Gegenringe ermöglichen Federelemente (25).

Die stationäre Radiallagerbüchse (18) ist hier ebenfalls in das Gehäuseteil (2.2) eingeschrumpft. Im Gegensatz dazu ist die rotierende Radiallagerhülse (17) anders befestigt. Für denjenigen Anwendungsfall, bei dem ausschließlich ein gleichbleibend kühles Fördermedium Anwendung findet, kann die rotierende Radiallagerhülse (17) mit einem leichten Schiebesitz auf das Entlastungselement aufgeschoben werden. Bei denjenigen Anwendungsfällen jedoch, bei denen wegen höherer Temperaturen,und unterschiedlicher Wärmeausdehnungskoeffizienten die Gefahr von Zugspannungen entsteht, findet die in der Zeichnung dargestellte Lösung Anwendung. Hierbei ist zwischen dem Entlastungselement (3) und der aus Keramik bestehenden Lagerhülse (17) eine federnd nachgiebige Hülse (26) angeordnet, welche gleichzeitig eine zentrierende Verbindung sicherstellt Diese Hülse weist punktförmige Anlagen zwischen dem Entlastungselement sowie der Radiallagerhülse (17) auf. Längsschlitze (27) verhindern das Auftreten von unerwünschten Spannungen in der Hülse (26). In axialer Richtung wirkt auf die keramische Radiallagerhülse durch zwei dichtend verspannte Dichtringe (28) eine Druckbelastung ein.

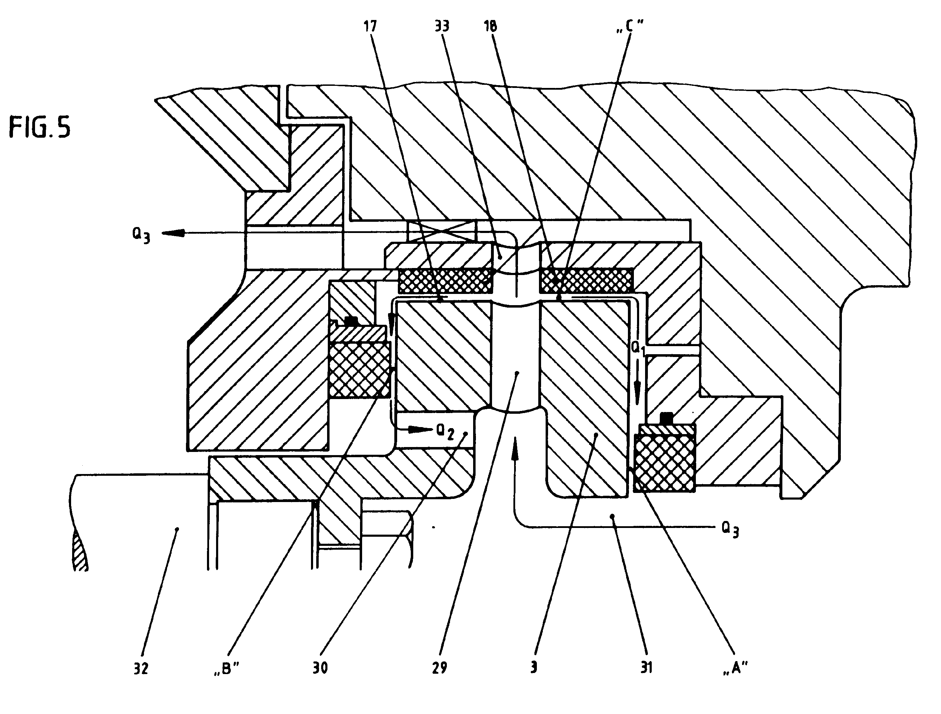

Die Darstellung der Fig. 5 unterscheidet sich von der Darstellung der Fig. 4 durch die zusätzlich in das Entlastungselement (3) integrierte Fördereinrichtung. Diese besteht aus den Förderkanälen (29) und den Eintrittsöffnungen (30, 31). Da sich die Entlastungseinrichtung hier am Ende einer Motorwelle (32) befindet, ist die Eintrittsöffnung (31) als zentrale Öffnung ausgebildet, während die dem Regelspalt (B) nachgeordnete Eintrittsöffnung (30) aus mehreren, hier in Richtung Welle verlaufenden Bohrungen besteht. Auch die Förderkanäle können als einfache Bohrungen ausgebildet sein. Durch einen diagonalen Verlauf in Richtung des Lagerelementes (17) könnten die die Eintrittsöffnung (30) bildenden Bohrungen gleichzeitig eine Förderfunktion erfüllen.

Zwischen den hier zweiteilig ausgebildeten, im Gehäuse angeordneten Lagerelementen (18) sind Durchströmöffnungen (33) angeordnet, die als zusätzliche Maßnahme für die Erzeugung eines Kühlkreislaufes innerhalb des nachgeordneten Motors sorgen. In der gezeigten Anordnung bilden sich nach den Förderkanälen (29) die gezeigten drei Teilströme aus. Die Teilströme (Q 1, Q 2) fließen den Regelspalten (A, B) zu, während der Teilstrom (Q 3) für den Motorkühlkreislauf zuständig ist. Nach Passieren der Regelspalte (C, A und B) strömen die Teilströme (Q 1, Q 2) wieder der Entlastungseinrichtung zu. Ohne die Durchströmöffnung (33) würden die Förderkanäle nur die Entlastungseinrichtung versorgen. Die Funktion der Entlastungseinrichtung wäre auch gewährleistet, wenn die hier gezeigten Regelspalte (A, B) auf gleichem Durchmesser angeordnet wären, da über die unterschiedlichen Regelspaltweiten (A) und (B) wegen der in Durchflußrichtung vorgelagerten festen Drosselspalte (C) sich unterschiedliche Drücke an den Stirnflächen des Entlastungselementes (3) zwischen seinem Außendurchmesser und den Regelspalten (A, B) einstellen und so eine axiale Ausgleichskraft erzeugen.

Der Vorteil der hier gezeigten Lösung besteht darin, daß bei der Förderung niedrig viskoser Flüssigkeiten während des normalen Betriebszustandes kein Mischreibungsbetrieb entstehen kann. Nur während weniger Umdrehungen beim Anfahren bzw. Auslaufen der Pumpe existiert noch Mischreibung. Danach entsteht infolge der Fördereinrichtung in der Entlastungseinrichtung sofort ein so großer Druck, welcher Flüssigkeitsreibung sicherstellt. Damit ergibt sich im Dauerbetrieb ein berührungs- und verschleißfreier Betriebszustand.

## Patentansprüche

1. Entlastungseinrichtung (1) für Strömungsmaschinen, mit einem auf einem rotierenden Maschinenteil (4) angeordneten, mit Axiallagern versehenen Entlastungselement (3), welches in Verbindung mit am Gehäuse (2.1, 2.2) angebrachten Drosselspalten (A,B) einen Axialschub reduziert, **dadurch gekennzeichnet,** daß die Entlastungseinrichtung (1) als selbständige bauliche Einheit an der Strömungsmaschine anbringbar ist, daß innerhalb der Einheit das Entlastungselement (3) und damit zusammenwirkende Regelspalte (A, B) sowie Radiallager (17, 18) und/oder Axiallager (9, 11; 10, 12) angeordnet sind, und daß einander gegenüberliegende Axiallagerringe (9, 11; 10, 12) in radialer Richtung erstreckende Regelspalte (A, B) bilden.

2. Entlastungseinrichtung nach Anspruch 1, dadurch gekennzeichnet, daß die Einheit ein mindestens zweiteilig ausgebildetes, die Teile der Entlastungseinrichtung umhüllendes Gehäuse (2.1, 2.2) aufweist.

3. Entlastungseinrichtung nach den Ansprüchen 1 und 2, dadurch gekennzeichnet, daß zwischen axialen Stirnseiten (5, 6) des Entlastungselementes (3) und gegenüberliegenden Gehäusewandteilen (7, 8) an sich bekannte Regelspalte (A, B) bestehen.

4. Entlastungseinrichtung nach den Ansprüchen 1 und 2, dadurch gekennzeichnet, daß zwischen einander gegenüberliegenden radialen Umfangsflächen des Entlastungselementes (3) und des Gehäuses (2.1, 2.2) ein an sich bekannter Drosselspalt (C) ausgebildet ist.

5. Entlastungseinrichtung nach den Ansprüchen 1 bis 4, dadurch gekennzeichnet, daß an den axialen Stirnseiten (5, 6) des Entlastungselementes (3) und den gegenüberliegenden Gehäuseseiten (7, 8) Axiallagerringe (9, 11; 10, 12) angeordnet sind.

6. Entlastungseinrichtung nach Anspruch 5, dadurch gekennzeichnet, daß die Axiallagerringe (9, 11; 10, 12) auf unterschiedlichen Durchmessern angeordnet sind.

7. Entlastungseinrichtung nach den Ansprüchen 1 bis 6, dadurch gekennzeichnet, daß an der radialen Umfangsfläche des Entlastungselementes (3) und an der gegenüberliegenden Gehäuseinnenwand ein oder mehrere Radiallager angeordnet sind.

8. Entlastungseinrichtung nach Anspruch 7, dadurch gekennzeichnet, daß am Entlastungselement (3) und/oder am Gehäuse (2.1, 2.2) Radiallagerteile (17, 18) angeordnet sind.

9. Entlastungseinrichtung nach den Ansprüchen 5 bis 8, dadurch gekennzeichnet, daß die Lagerelemente (9-12, 17, 18) als keramische Bauteile ausgebildet sind.

10. Entlastungseinrichtung nach Anspruch 9, dadurch gekennzeichnet, daß von den Lagerpaarungen mindestens ein Lagerelement (10, 11, 17) elastisch nachgiebig angeordnet ist.

11. Entlastungseinrichtung nach den Ansprüchen 1 bis 10, dadurch gekennzeichnet, daß das Entlastungselement (3) mit Förderkanälen (29) und Eintrittsöffnungen (30) versehen ist.

12. Entlastungseinrichtung nach den Ansprüchen 1 bis 11, dadurch gekennzeichnet, daß die Förderkanäle (29) in radialer Richtung verlaufen.

13. Entlastungseinrichtung nach Anspruch 11, dadurch gekennzeichnet, daß die Eintrittsöffnungen (30) auf kleinerem Durchmesser als die Regelspalte (A, B) angeordnet sind.

14. Entlastungseinrichtung nach den Ansprüchen 11 bis 13, dadurch gekennzeichnet, daß im Gehäuse (2.1, 2.2) den Förderkanälen gegenüberliegende Durchströmöffnungen (33) angeordnet sind.

15. Entlastungseinrichtung nach den Ansprüchen 1 bis 13, gekennzeichnet durch eine das Radiallager (17, 18) angehende, die druckbelasteten Axiallagerräume (15, 16) verbindende Druckbeeinflussungseinrichtung (19, 20).

16. Entlastungseinrichtung nach den Ansprüchen 5 bis 15, dadurch gekennzeichnet, daß als Lagerelemente Panzerschichten auf das Entlastungselement (3) und/oder am Gehäuse (2.1, 2.2) aufgeschweißt, aufgespritzt oder in entsprechender Weise aufgebracht sind.

17. Entlastungseinrichtung nach einem oder mehreren der Ansprüche 1 bis 16, dadurch gekennzeichnet, daß das Entlastungselement (3) und/oder das Gehäuse (2.1, 2.2) oder dessen Teile aus für Lagerzwecke verwendbaren, fluidbeständigen Werkstoffen besteht.

18. Entlastungseinrichtung nach Anspruch 17, dadurch gekennzeichnet, daß anstelle der Lagerelemente oder der Panzerschichten Teile des Entlastungselementes (3) und Gehäuseteile aus für Lagerzwecke verwendbaren, fluidbeständigen Werkstoffen ausgeführt sind.

19. Entlastungseinrichtung nach den Ansprüchen 11 bis 18, dadurch gekennzeichnet, daß die die Regelspalte (A) und (B) bildenden Axiallagerringe auf gleichem Durchmesser angeordnet sind.

**Claims**

1. A balancing device (1) for fluid flow machines, comprising a balancing element (3) arranged on a rotating machine part (4) and provided with axial bearings, which element in conjunction with throttle gaps provided on the housing (2.1 and 2.2) reduces an axial thrust, characterized in that the balancing device (1) is adapted to be mounted on the fluid flow machine as a self-contained unit, in that the balancing unit (3) and the regulation gaps (A and B) in cooperation with it and furthermore radial bearings (17 and 18) and/or axial bearings (9, 11; 10 and 12) are arranged within the unit and in that mutually opposite axial bearing rings (9, 11; 10 and 12) define regulation gaps (A and B) extending in the radial direction.

2. The balancing device as claimed in claim 1, characterized in that the unit comprises a housing (2.1 and 2.2) which is made in at least two parts and encases the parts of the balancing device.

3. The balancing device as claimed in claim 1 and claim 2, characterized in that between the axial end surfaces (5 and 6) of the balancing element (3) and the opposite housing wall parts (7 and 8) known regulation gaps (A and B) are present.

4. The balancing device as claimed in claim 1 and claim 2, characterized in that between the mutually opposite radial end surfaces of the balancing element (3) and of the housing (2.1 and 2.2) a known throttle gap (C) is constituted.

5. The balancing device as claimed in any one of the claims 1 through 4, characterized in that axial bearing rings (9, 11; 10 and 12) are arranged on the axial end surfaces (5 and 6) of the balancing element (3) and the oppositely arranged sides (7 and 8) of the housing.

6. The balancing device as claimed in claim 5, characterized in that the axial bearing rings (9, 11; 10 and 12) are arranged on different diameters.

7. The balancing device as claimed in any one of the claims 1 through 6, characterized in that one or more radial bearings are arranged on the radial circumferential surface of the balancing element (3) and on the mutually opposite inner wall of the housing.

8. The balancing device as claimed in claim 7, characterized in that radial bearing parts (17 and 18) are arranged on the balancing element (3) and/or on the housing (2.1 and 2.2).

9. The balancing device as claimed in claims 5 through 8, characterized in that the bearing elements (9 through 12, 17 and 18) are designed in the form of ceramic components.

10. The balancing device as claimed in claim 9, characterized in that at least one bearing element (10, 11 and 17) of the bearing pairs is arranged to yield elastically.

11. The balancing device as claimed in claims 1 through 10, characterized in that the balancing element (3) is provided with transfer ducts (29) and intake openings (30).

12. The balancing device as claimed in claims 1 through 11, characterized in that the transfer ducts (29) extend in a radial direction.

13. The balancing device as claimed in claim 11, characterized in that the intake openings (30) are arranged on a smaller diameter than the regulation gaps (A and B).

14. The balancing device as claimed in claims 11 through 13, characterized in passage openings (33) are arranged in the housing (2.1 and 2.2) opposite to the transfer duct.

15. The balancing device as claimed in claims 1 through 13, characterized by a pressure influencing means (19 and 20) extending around the radial bearing (17 and 18) and connecting the pressure-loaded axial bearing spaces (15 and 16).

16. The balancing device as claimed in claims 5 through 15, characterized in that the bearing elements are in the form of armor layers on the balancing element (3) and/or on the housing (2.1 and 2.2) applied by welding, by spraying or in some equivalent manner.

17. The balancing device as claimed in any one or more of the claims 1 through 16, characterized in that the balancing element (3) and/or the housing (2.1 and 2.2) or parts thereof consist of materials suitable for use as bearings and resistant to fluids.

18. The balancing device as claimed in claim 17, characterized in that in lieu of the bearing element or of the armor layer parts of the balancing element (3) parts of the housing are manufactured of materials suitable for use as bearings and resistant to fluids.

19. The balancing device as claimed in claims 11 through 18, characterized in that the axial bearing rings defining the regulation gaps (A) and (B) are arranged on the same diameter.

## Revendications

1. Dispositif d'équilibrage (1) pour turbomachines avec un élément d'équilibrage (3) placé sur une partie de la machine en rotation (4) et muni de paliers axiaux, élément qui réduit la poussée axiale en liaison avec des fentes d'étranglement (A, B) placées sur le boîtier (2.1, 2.2) caractérisé en ce que le dispositif d'équilibrage (1) peut être monté sur la turbomachine comme une unité de construction indépendante, en ce que sont placés dans l'unité l'élément d'équilibrage (3) et les fentes de réglage (A, B) qui agissent avec celui-ci ainsi que des paliers radiaux (17, 18) et/ou des paliers axiaux (9, 11 ; 10, 12) et en ce que des bagues de paliers axiales (9, 11 ; 10 ,12) se faisant face entre elles forment des fentes de réglage (A, B) orientées dans le sens radial.

2. Dispositif d'équilibrage selon la revendication 1 caractérisé en ce que l'unité présente un boîtier (2.1, 2.2) formé d'au moins deux parties et entourant les pièces du dispositif d'équilibrage.

3. Dispositif d'équilibrage selon les revendications 1 et 2 caractérisé en ce que se trouvent des fentes de réglage (A, B) bien connues entre les faces frontales axiales (5, 6) de l'élément d'équilibrage (3) et les pièces de la paroi du boîtier (7, 8) situées en face.

4. Dispositif d'équilibrage selon les revendications 1 et 2 caractérisé en ce qu'est formée une fente d'étranglement (C) bien connue entre des faces périphériques radiales opposées de l'élément d'équilibrage (3) et du boîtier (2.1, 2.2).

5. Dispositif d'équilibrage selon les revendications 1 à 4 caractérisé en ce que des bagues de paliers axiales (9, 11 ; 10, 12) sont placées sur les faces frontales axiales (5, 6) de l'élément d'équilibrage (3) et sur les faces opposées du boîtier (7, 8).

6. Dispositif d'équilibrage selon la revendication 5 caractérisé en ce que les bagues de paliers axiales (9, 11 ; 10, 12) sont placées sur divers diamètres.

7. Dispositif d'équilibrage selon les revendications 1 à 6 caractérisé en ce que plusieurs paliers radiaux sont placés sur la surface périphérique de l'élément d'équilibrage (3) et sur la paroi interne opposée du boîtier.

8. Dispositif d'équilibrage selon la revendication 7 caractérisé en ce que des pièces de paliers radiaux (17, 18) sont placées sur l'élément d'équilibrage (3) et/ou sur le boîtier (2.1, 2.2).

9. Dispositif d'équilibrage selon les revendications 5 à 8 caractérisé en ce que les éléments de paliers (9-12, 17, 18) ont la forme d'éléments de construction en céramique.

10. Dispositif d'équilibrage selon la revendiction 9 caractérisé en ce qu'au moins un élément de palier (10, 11, 17) parmi les couples de paliers est placé de façon à être mou et élastique.

11. Dispositif d'équilibrage selon les revendications 1 à 10 caractérisé en ce que l'élément d'équilibrage (3) est muni de canaux de refoulement (29) et d'ouvertures d'entrée (30).

12. Dispositif d'équilibrage selon las revendications 1 à 11 caractérisé en ce que les canaux de refoulement (29) sont orientés dans le sens radial.

13. Dispositif d'équilibrage selon la revendication 11 caractérisé en ce que les ouvertures d'entrée (30) sont placées sur un diamètre inférieur à celui des fentes de réglage (A, B).

14. Dispositif d'équilibrage selon les revendications 11 à 13 caractérisé en ce que des ouvertures de passage du flux (33) sont placées dans le boîtier (2.1, 2.2) à l'opposé des canaux de refoulement.

15. Dispositif d'équilibrage selon les revendications 1 à 13 caractérisé par un dispositif d'influence de la pression (19, 20) entourant le palier radial (17, 18) et reliant les chambres des paliers axiaux (15, 16) soumises à la pression.

16. Dispositif d'équilibrage selon les revendications 5 à 15 caractérisé en ce que, servant d'éléments de paliers, des couches de blindage sont soudées, appliquées au pistolet ou montées de manières adéquate sur l'élément d'équilibrage (3) et/ou sur le boîtier (2.1, 2.2).

17. Dispositif d'équilibrage selon une ou plusieurs des revendications 1 à 16 caractérisé en ce que l'élément d'équilibrage (3) et/ou le boîtier (2.1, 2.2) ou ses pièces sont construits dans des matériaux utilisables pour les paliers et résistants aux fluides.

18. Dispositif d'équilibrage selon la revendication 17 caractérisé en ce que des parties de l'élément d'équilibrage (3) et des pièces du boîtier sont construites dans des matériaux utilisables pour les paliers et résistants aux fluides à la place des éléments de paliers ou des couches de blindage.

19. Dispositif d'équilibrage selon les revendications 11 à 18 caractérisé en ce que les bagues de paliers axiales formant les fentes de réglage (A) et (B) sont placées sur le même diamètre.

Fig.1

2.2    2.1

3

5

8

4

7

6

1

0

A    B

Fig.2

2.2    2.1

3

+

A    B

Fig. 3

2.2    2.1

3

+

A    B

Fig. 4

FIG.5

17   33   18   „C"

Q₃

Q₁

Q₂

Q₃

32   „B"   30   29   3   31   „A"

11

EP 0 461 131 B1